# EUROPÄISCHE PATENTANMELDUNG

(11) **EP 2 463 592 A2**
(43) Veröffentlichungstag der Anmeldung: **13.06.2012**
(21) Anmeldenummer: 11191476.8
(22) Anmeldetag: 01.12.2011
(51) Int. Cl.: F24D 19/02

(54) **Bohrkonsole für Heizkörper**

(30) Priorität: 13.12.2010 DE 202010016535 U
(71) Anmelder: Kermi GmbH, 94447 Plattling (DE)
(72) Erfinder: Seidl, Hermann, 94522 Wallersdorf (DE)
(74) Vertreter: Patentanwälte Bressel und Partner

(57) **Zusammenfassung**

Die Erfindung betrifft eine Bohrkonsole zur Befestigung und Halterung von schweren Gegenständen, insbesondere von Heizkörpern an einer Wand oder dgl., bestehend aus einem Spreizdübel (2), der in einer geschlitzten Rundhülse (3) gelagert ist, einer Anzugsschraube (4) und einem am Vorderende der Rundhülse durch die Anzugsschraube (4) feststellbaren Konsolenkopf (5), wobei der Konsolenkopf 5 als Kugelkopf ausgebildet ist und Mittel (6) zur Halterung des Heizkörpers aufweist.

## Beschreibung

Die Erfindung betrifft eine Bohrkonsole zur Befestigung und Halterung von schweren Gegenständen, insbesondere von Heizkörpern an einer Wand oder dgl. nach dem Oberbegriff des Anspruchs 1.

Derartige Bohrkonsolen werden insbesondere zur Befestigung und Halterung von Heizkörpern verwendet, die an ihrer Rückseite Befestigungslaschen aufweisen, welche mit den Bohrkonsolen in Verbindung stehen. Bekannte Bohrkonsolen bestehen meist aus einem Spreizdübel, der eine Rundhülse und einen Konus umfasst, einen Schraubbolzen und einen am Vorderende der Rundhülse durch den Schraubbolzen feststellbaren Konsolenkopf zum Einhängen des Heizkörpers.

Aus der DE 32 41 584 A1 ist eine Bohrkonsole zur Wandbefestigung von Heizkörpern bekannt, die einen Spanndübel mit einer Spreizhülse, einen Spreizkeil und einer Spannschraube aufweist, die sich durch eine am vorderen Ende der Spreizhülse anliegende Arbeitsplatte erstreckt und mit einem Schraubkopf an der Vorderseite anliegt. Weiter ist ein Trageteil vorgesehen, das höhenverstellbar in einem Längsschlitz der Abstützplatte geführt ist und eine Stellschraube aufweist.

In der DE 195 34 678 A1 ist eine weitere Bohrkonsole zur Abstützung von schweren Gegenständen, wie Heizkörpern, an einer Wand offenbart, die einen Spreizdübel, einer in der Bohrung des Spreizdübels sitzenden Befestigungsschraube und einer am Dübelkopf durch die Befestigungsschraube feststellbaren Konsole zum Einhängen des Heizkörpers aufweist, wobei am Dübelumfang ein Klemmring verschiebbar angeordnet ist.

Weitere derartige Bohrkonsolen werden in den Druckschriften DE 20 2006 019 695 U1 und DE 203 16 770 U1 beschrieben.

Die bekannten Bohrkonsolen sind meist als Blechkonstruktionen ausgeführt, der Exzenter zur Aufnahme und Höhenverstellung ist meist aus Kunststoff gefertigt. Häufig kommt es bei der Montage schwerer Heizkörper zum Abknicken der Konsole. Die separat beigelegte und nach Abschluss der Montage anzubringende Aushebesicherung wird häufig nicht montiert. Weiter sind derartige Konsolen gegen eine seitliche Verschiebung nicht gesichert.

Erfindungsgemäß wird diese Aufgabe durch die Merkmale des Anspruchs 1 gelöst Vorteilhafte Weiterbildungen der Erfindung sind in den zugehörigen Ansprüchen enthalten. Demnach beinhaltet die Erfindung eine Bohrkonsole zur Befestigung und Halterung von schweren Gegenständen, insbesondere von Heizkörpern an einer Wand oder dgl. bestehend aus einem Spreizdübel, der in einer geschlitzten Rundhülse gelagert ist, einer Spannschraube und einem am Vorderende der Rundhülse durch die Spannschraube feststellbaren Konsolenkopf, wobei der Konsolenkopf als Kugelkopf ausgebildet ist und Mittel zur Halterung des Heizkörpers aufweist. Nach einem besonderen Merkmal der Erfindung ist vorgesehen, dass der Konsolenkopf ein Mehrkantteil mit einem daran angeformten exzentrischen Kugelkopf umfasst, welcher in einer Kugelpfanne gelagert ist, wobei die Kugelpfanne Mittel zur Halterung des Heizkörpers aufweist. Vorteilhaft weisen der Konsolenkopf und die Mittel Heizkörperhalterung eine Bohrung zur Durchführung bzw. Aufnahme der Spannschraube auf. Besonders vorteilhaft ist vorgesehen, dass die Mittel zur Halterung des Heizkörpers eine Aushebesicherung umfassen. Nach einer weiteren Ausführung der Erfindung weisen die Mittel zur Halterung des Heizkörpers eine Verzahnung auf, die ein seitliches Verschieben des Heizkörpers verhindern. Nach einer weiteren Variante der Erfindung ist am Mehrkantteil des Konsolenkopfes ein hülsenförmiger Ansatz vorgesehen, auf welchen die Rundhülse aufschiebbar ist. Dadurch kann das derzeit auftretende Abknicken des Bohrkonsolenkopfes verhindert werden.

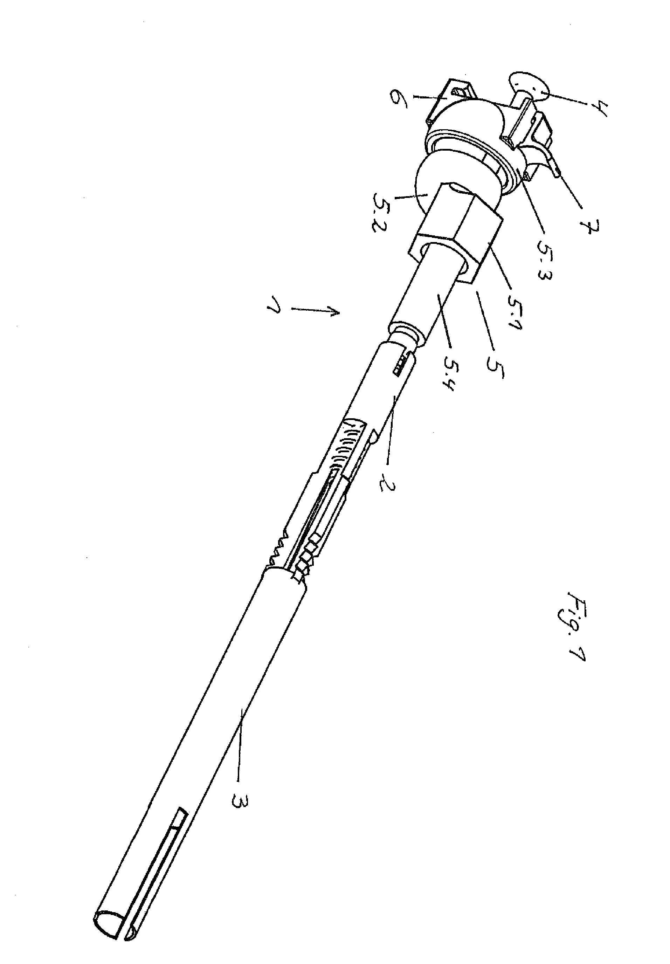

Es zeigen
Fig. 1 eine perspektivische Darstellung der Teile der Bohrkonsole,

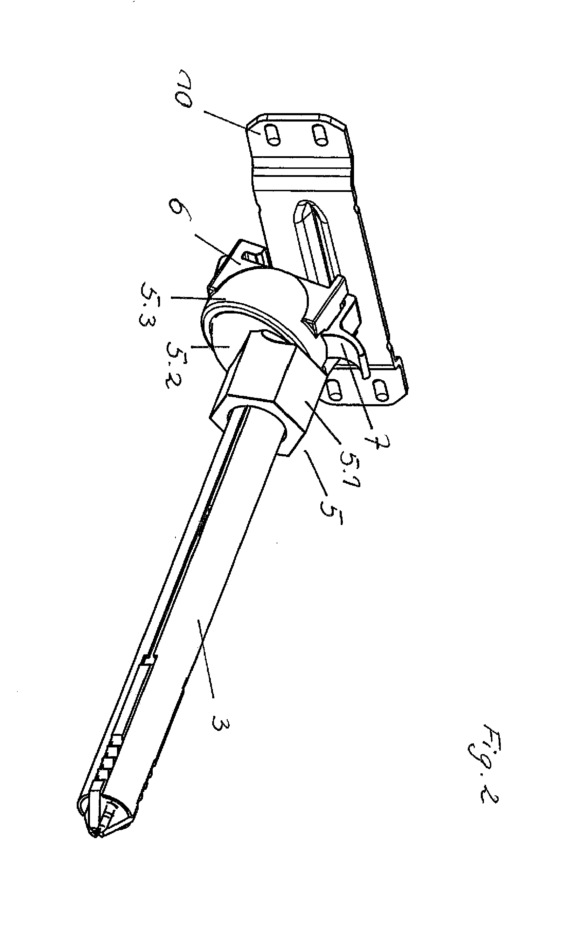

Fig. 2 eine perspektivische Darstellung Bohrkonsole mit Befestigungslasche eines Heizkörpers,

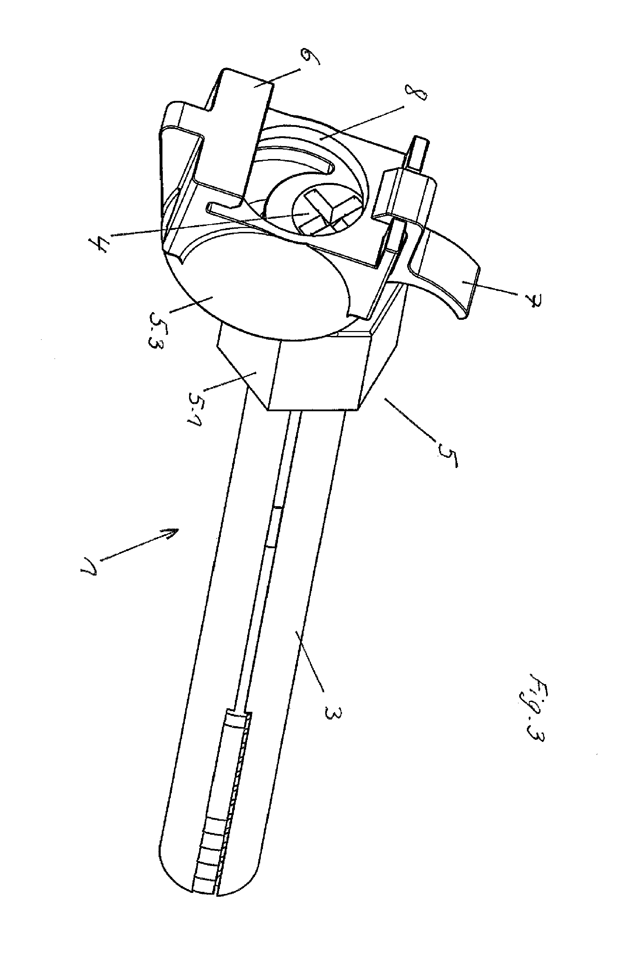

Fig. 3 eine Vorderansicht der Bohrkonsole.

Die Bohrkonsole 1 besteht aus einem Kunststoffdübel 2, einer geschlitzten Rundhülse 3 aus Metall, einer Anzugschraube 4 und einem am vorderen Ende der Rundhülse 3 durch die Anzugsschraube 4 feststellbaren Konsolenkopf 5, der als Kugelkopf ausgebildet ist und Mittel 6 zur Halterung des Heizkörpers aufweist.

Der Konsolenkopf 5 umfasst ein Mehrkantteil 5.1 mit einem daran angeformten exzentrischen Kugelkopf 5.2, welcher in einer Kugelpfanne 5.3 gelagert ist, wobei an der Kugelpfanne die Mittel 6 zur Halterung des Heizkörpers angeformt sind. Nach dem Einbringen der Konsole in eine Bohrung im Mauerwerk wird mittels der Anzugschraube 4 und dem drehbar mit dem Konsolenkopf 5 verbundenen Kunststoffdübel 2 die Konsole 1 in der gewünschten Tiefe fixiert. Die Höhenverstellung erfolgt durch Verdrehen des exzentrischen Kugelkopfes 5.2. Vor dem Anbringen des Heizkörpers werden die auf den Kugelköpfen 5.2 befindlichen Kugelpfannen 5.3 mit Heizkörperaufnahme 6 leicht nach hinten geneigt. Beim Einhängen des Heizkörpers werden durch dessen Gewichtskraft die Aufnahmen an die am Heizkörper angeordneten Befestigungslaschen 10 gepresst und gleichzeitig die Aushebesicherung 7 aktiviert. Somit ist eine seitliche und unbeabsichtigte Verschiebung nicht mehr möglich. Durch Anheben und nach vorne ziehen des Heizkörpers kann dieser wieder demontiert werden. Am Mehrkantteil 5.1 des Konsolenkopfes 5 ist ein Ansatz 5.4 vorgesehen, auf welchen die Rundhülse 3 aufschiebbar ist. Dadurch kann das derzeit auftretende Abknicken des Bohrkonsolenkopfes verhindert werden und zwar insbesondere dann, wenn der Ansatz in Verlängerung des Kugelkopfes 5 ca. bis zur Mitte der Bohrkonsole reicht. Durch die aufgeschobene Metallhülse wird die Konsole weiter stabilisiert.

Auch die annähernd spielfrei eingebrachte Anzugschraube ist in der Lage weitere Kräfte aufzunehmen.

## Patentansprüche

1. Bohrkonsole zur Befestigung und Halterung von schweren Gegenständen, insbesondere von Heizkörpern an einer Wand oder dgl., bestehend aus einem Spreizdübel (2), der in einer geschlitzten Rundhülse (3) gelagert ist, einer Anzugsschraube (4) und einem am Vorderende der Rundhülse durch die Anzugsschraube (4) feststellbaren Konsolenkopf (5), **dadurch gekennzeichnet, dass** der Konsolenkopf 5 als Kugelkopf ausgebildet ist und Mittel (6) zur Halterung des Heizkörpers aufweist.

2. Bohrkonsole nach Anspruch 1, **dadurch gekennzeichnet, dass** der Konsolenkopf (5) ein Mehrkantteil (5.1) mit einem daran angeformten exzentrischen Kugelkopf (5.2) umfasst, welcher in einer Kugelpfanne (5.3) gelagert ist, wobei die Kugelpfanne (5.3) Mittel 6 zur Halterung des Heizkörpers aufweist.

3. Bohrkonsole nach den Ansprüchen 1 und 2, **dadurch gekennzeichnet, dass** der Konsolenkopf (5) und die Mittel (6) Heizkörperhalterung eine Bohrung (8) zur Durchführung bzw. Aufnahme der Anzugsschraube (4) aufweisen.

4. Bohrkonsole nach den Ansprüchen 1 bis 3, **dadurch gekennzeichnet, dass** die Mittel (6) zur Halterung des Heizkörpers eine Aushebesicherung (7) umfassen.

5. Bohrkonsole nach den Ansprüchen 1 bis 4, **dadurch gekennzeichnet, dass** die Mittel (6) zur Halterung des Heizkörpers eine Verzahnung aufweisen, die ein seitliches Verschieben des Heizkörpers verhindern.

6. Bohrkonsole nach den Ansprüchen 1 bis 5, **dadurch gekennzeichnet, dass** am Mehrkantteil des Konsolenkopfes (5) ein Ansatz (5.4) vorgesehen ist, auf welchen die Rundhülse (3) aufschiebbar ist.
